# EUROPÄISCHE PATENTSCHRIFT

(11) **EP 0 905 356 B1**
(45) Veröffentlichungstag und Bekanntmachung des Hinweises auf die Patenterteilung: **20.03.2002**
(21) Anmeldenummer: 98115549.2
(22) Anmeldetag: 18.08.1998
(51) Int. Cl.: F01N 3/20

(54) **NOx-Reduktionssystem mit einer Einrichtung zur Reduktionsmitteldosierung**
NOx reduction system with a reducing agent metering device
Système de réduction de NOx avec dispositif de dosage d' agent de réduction

(30) Priorität: 30.09.1997 DE 19743337
(43) Veröffentlichungstag der Anmeldung: 31.03.1999
(73) Patentinhaber: SIEMENS AKTIENGESELLSCHAFT, 80333 München (DE)
(72) Erfinder: Hofmann, Lothar, 96264 Altenkunstadt (DE); Mathes, Wieland, 96247 Michelau (DE); Neufert, Ronald, 96247 Michelau (DE); Pajonk, Günther, 96199 Zapfendorf (DE); Weigl, Manfred, 93161 Viehhausen (DE); Weisensel, Dietmar, 93161 Sinzing (DE); Wenzlawski, Klaus, 90429 Nürnberg (DE); Wissler, Gerhard, 93104 Sünching (DE)

(56) Entgegenhaltungen:
- EP-A- 0 555 746
- DE-U- 29 717 494
- PATENT ABSTRACTS OF JAPAN vol. 018, no. 465 (M-1665), 30. August 1994 (1994-08-30) & JP 06 146863 A (HINO MOTORS LTD), 27. Mai 1994 (1994-05-27)

## Beschreibung

Die Erfindung betrifft ein NOₓ-Reduktionssystem mit einer Einrichtung zur Reduktionsmitteldosierung gemäß dem Oberbegriff des Patentanspruches 1.

Während das Abgas einer mit der Luftzahl λ = 1 betriebenen Otto-Brennkraftmaschine mit Hilfe des sogenannten Dreiwege-Katalysators wirkungsvoll von den Hauptemittenden Stickoxide NOₓ, Kohlenwasserstoffe HC und Kohlenmonoxid CO gereinigt werden kann, ist dieser Katalysator zur Abgasnachbehandlung bei einer mit Luftüberschuß (λ >1) arbeitenden Brennkraftmaschine (Dieselbrennkraftmaschine oder Otto-Brennkraftmaschine mit Magerbetrieb) nur teilweise geeignet. Es werden lediglich die Kohlenwasserstoffe und das Kohlenmonoxid weitgehend abgebaut, während wegen des hohen Sauerstoffgehaltes im Abgas die Stickoxide nicht merklich vermindert werden können.

Die Stickoxidemissionen solcher Brennkraftmaschinen läßt sich mit Hilfe der sogenannten selektiven katalytischen Reaktion (Selectiv Catalytic Reduktion, SCR-Verfahren,) vermindern. Als Reduktionsmittel wird dabei häufig Ammoniak NH₃ dem SCR-Prozeß durch die Harnstoff-Hydrolyse zur Verfügung gestellt. Der in wässriger Lösung mitgeführte Harnstoff dient dabei als Ammoniakträger und wird mit Hilfe eines Dosiersystems vor einem Hydrolysekatalysator zu Ammoniak umgewandelt, der dann in dem eigentlichen SCR-Katalysator die Stickoxide reduziert, wie z.B. in EP-A-0 555 746.

Darüberhinaus ist es auch möglich, Ammoniak unmittelbar als Reduktionsmittel einzusetzen. Es ist dann kein Hydrolysekatalysator notwendig.

Ein solches NOₓ-Reduktionssystem mit einem SCR-Katalysator und Reduktionsmitteldosierung erfordert Sensoren und Aktoren, wie Temperatursensoren und NOₓ -Sensoren am Abgasstrang stromaufwärts bzw. stromabwärts des SCR-Katalysators, ein Dosierventil, einen Reduktionsmittelbehälter mit Füllstands- und Temperaturmessung, Heizeinrichtung, sowie ein Fördersystem (Pumpe und Leitungen). Zur Steuerung des NOₓ-Reduktionssystems sind spezielle Steuer- und Regelalgorithmen für die exakte Dosierung und für den Reduktionsmittelbehälter zusätzlich zu dem Brennkrafmaschinenemanagement notwendig.

Daraus ergeben sich folgende Probleme:
a) Die elektrischen Verbindungen von allen Sensoren und Aktoren am Abgasstrang und Reduktionsmittelbehälter erfordern eine aufwendige Erweiterung des Kabelbaumes der Brennkraftmaschine, insbesondere da diese Komponenten nicht direkt an der Brennkraftmaschine oder nahe an dem elektronischen Steuergerät der Brennkraftmaschine verbaut werden können.
b) Die großen Kabellängen erfordern erhöhten Aufwand bezüglich elektromagnetischer Kompatibilität, insbesondere benötigen die Sensoren separate Masseleitungen, um trotz hoher Ströme für die Aktoren (Dosierventil, Förderpumpe und Reduktionsmittelheizung) korrekte Meßwerte zu ermöglichen.
c) Die Sensoren und Aktoren belegen zusätzliche Ein- und Ausgänge an dem elektronischen Steuergerät der Brennkraftmaschine. Der Steuergeräterechner wird durch dosier- und tankspezifische Daten, wie beispielsweise Ventilcharakteristik, Sensorkennlinien und durch Steuerung von Dosierung, Heizung und Förderpumpe belastet.

Der Erfindung liegt die Aufgabe zugrunde, ein NOₓ-Reduktionssystem für eine Brennkraftmaschine der eingangs genannten Art anzugeben, mit dem die angegebenen Nachteile weitgehend vermieden werden können.

Diese Aufgabe wird gemäß den Merkmalen des Patentanspruches 1 gelöst. Vorteilhafte Weiterbildungen sind in den Unteransprüchen angegeben.

Durch die Integration eines Steuergerätes für das NOₓ-Reduktionssystem als eine eigene Funktionseinheit zusammen mit den Aktoren und Sensoren am Reduktionsmittelbehälter, das alle für die Steuerung, Regelung, Förderung und Reduktionsmitteldosierung nötigen Funktionen übernimmt, können die unter a) bis c) genannten Probleme gelöst werden.

Die elektrischen Verbindungen innerhalb dieser Funktionseinheit können kostengünstig und ohne zusätzlichen Bedarf an Einbauraum ausgeführt werden, da nur kurze, in der Gehäusekonstruktion integrierte Leitungsführungen und keine separaten Steckverbindungen mehr nötig sind. Die Verwendung einer seriellen Schnittstelle als Verbindung zum Steuergerät der Brennkraftmaschine minimiert den Verkabelungsaufwand erheblich.

Durch die Integration der Sensorsignalaufbereitung in einem separaten Steuergerät vereinfacht sich auch die EMV-gerechte Auslegung der Sensorverkabelung am Abgasstrang, da der Massebezug unabhängig vom Steuergerät der Brennkraftmaschine optimiert werden kann. Die Sensoren am Reduktionsmittelbehälter können aufgrund der räumlichen Integration elektrisch sehr einfach an die Signalaufbereitung angebunden werden. Aufgrund der direkten Zuordnung von Sensoren zum Steuergerät können zudem kostengünstige, unkalibrierte Sensoren verwendet werden, da die Kalibrierung exemplarspezifisch im Steuergerät gespeichert werden kann.

Das Steuergerät der Brennkraftmaschine benötigt nur eine serielle Schnittstelle (zB. CAN, Controller Area Network). Diese Schnittstelle ist in vielen Anwendungen ohnehin im Steuerungssysten der Brennkraftmaschine nötig, stellt als keinen Mehraufwand dar. Das Steuergerät der Brennkraftmaschine muß nur die benötigten Daten wie beispielsweise Abgasmasse, Spritzbeginn, Kraftstoffmenge pro Verbrennungszyklus an dieser Schnittstelle bereitstellen.

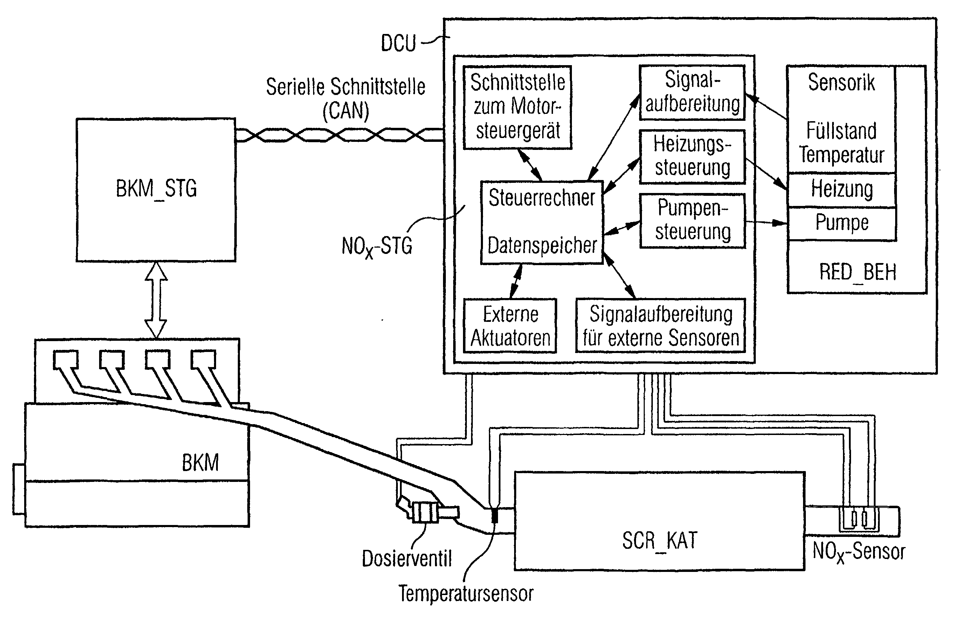

Ein Ausführungsbeispiel ist im folgenden unter Bezugnahme der einzigen Figur näher erläutert. Sie zeigt in Form eines Blockschaltbildes eine Brennkraftmaschine BKM mit zugehörigem Brennkraftmaschinen-Steuergerät BKM_STG und ein NOₓ-Reduktionsssystem, bestehend aus einem SCR-Katalysator SCR-KAT, einem Reduktionsmittelbehälter RED_BEH und einem Steuergerät NOx_STG. Dieses ist am Reduktionsmittelbehälter RED_BEH integriert und folgedessen in der Figur innerhalb eines Blokkes dargstellt und als Dosiereinheit mit integriertem Steuergerät DCU bezeichnet.

Der Reduktionsmittelbehälter RED_BEH weist eine Pumpe zum Fördern des Reduktionsmittel auf, sowie eine elektrische Heizeinrichtung zum Beheizen des Reduktionsmittels. Über eine ensprechende Sensorik wird sowohl die Temperatur, als auch der Füllstand des Reduktionsmittels im Behälter erfasst. Diese Signale werden an das Steuergerät NOx-STG zur Signalaufbereitung und Weiterverarbeitung übergeben.

Das Steuergerät am Reduktionsmittelbehälter enthält folgende Funktionsblöcke:
- eine serielle Schnittstelle (zB: CAN-BUS) zu dem Steuergerät der Brennkraftmaschine BKM_STG und /oder zu weiteren Steuergeräten. Über diese Schnittstelle werden zB. Drehzahl, Regelweg und Ladelufttemperatur übergeben.
- eine externe Aktoransteuerung mit der Möglichkeit zur Prüfung der Aktoren, beispielsweise durch Messung von Strömen oder Reaktionszeiten. Mit Hilfe dieses Blockes wird das Dosierventil für das Reduktionsmittel angesteuert.
- alle notwenigen Spannungsversorgungen und Signalaufbereitungsschaltungen für die internen Sensoren (Füllstand, Temperatur des Reduktionsmittels) und externen Sensoren (Temperatursensor und NOx-Sensor am Abgasstrang)
- alle Signalauswertungen gemäß sensorspezifischen Kenndaten
- Heizungs- und Pumpensteuerung für den Reduktionsmittelbehälter
- Plausibilitätsprüfungen der Sensorsignale (Fehlererkennung, Diagnose)
- Selbstkalibrierfunktionen und Diagnose

Diese anhand von Blöcken dargestellten Funktionen werden von einem Steuerrechner mit zugeordnetem Datenspeicher durchgeführt.

## Patentansprüche

1. NOₓ-Reduktionssystem für eine mit Luftüberschuß arbeitende Brennkraftmaschine, insbesondere eine Diesel-Brennkraftmaschine mit
- einem in der Abgasleitung der Brennkraftmaschine (BKM) angeordneten SCR-Katalysator (SCR_KAT),
- einem Reduktionsmittelbehälter (RED_BEH) zum Speichern von Reduktionsmittel,
- einer Dosiereinrichtung zum Zumessen des Reduktionsmittels in die Abgasleitung stromaufwärts des SCR-Katalysators (SCR_KAT) und
- einer Steuerungseinrichtung (NOₓ_STG) mit zugeordneten Sensoren und Aktoren zum Steuern des NOₓ -Reduktionssystemes
**dadurch gekennzeichnet, daß** die Steuerungseinrichtung (NOₓ_STG) als eine eigene Funktionseinheit zusammen mit den für die Speicherung, Förderung, Aufbereitung und Dosierung des Reduktionsmittels benötigten Sensoren und Aktoren am Reduktionsmittelbehälter (RED_BEH) integriert ist.

2. Vorrichtung nach Anspruch 1, **dadurch gekennzeichnet, daß** die Steuerungseinrichtung (NOₓ_STG) über eine serielle Schnittstelle (CAN) mit einem Steuergerät der Brennkraftmaschine (BKM_STG) verbunden ist.

3. Vorrichtung nach Anspruch 1, **dadurch gekennzeichnet, daß** die Steuerungseinrichtung (NOₓ_STG) Signalaufbereitungsschaltungen für die Signale enthält, die von den dem Reduktionsmittelbehälter (RED_BEH) zugeordneten Sensoren erfasst werden.

4. Vorrichtung nach Anspruch 3, **dadurch gekennzeichnet, daß** dem Reduktionsmittelbehälter (RED_BEH) Sensoren zur Ermittlung des Füllstandes und der Temperatur des Reduktionsmittels zugeordnet sind.

5. Vorrichtung nach Anspruch 1, **dadurch gekennzeichnet, daß** die Steuerungseinrichtung (NOₓ_STG) Signalaufbereitungsschaltungen für die Signale enthält, die von den dem SCR-Katalysator (SCR_KAT) zugeordneten Sensoren erfasst werden.

6. Vorrichtung nach Anspruch 5, **dadurch gekennzeichnet, daß** daß dem SCR-Katalysator (SCR_KAT) Sensoren zur Ermittlung der Temperatur und des NOₓ-Gehaltes im Abgas zugeordnet sind.

7. Vorrichtung nach Anspruch 1, **dadurch gekennzeichnet, daß** die Steuerungseinrichtung (NOₓ_STG) Steuerschaltungen für dem Reduktionsmittelbehälter (RED_BEH) zugeordnete Aktoren, wie Förderpumpe und Heizeinrichtung für das Reduktionsmittel enthält.

8. Vorrichtung nach Anspruch 7, **dadurch gekennzeichnet, daß** die Steuerungseinrichtung (NOₓ_STG) Steuerschaltungen zum Ansteuern von externen Aktoren, wie ein Dosierventil zum Dosieren des Reduktionsmittels enthält.

## Claims

1. NOXₓ reduction system for an internal-combustion engine which operates with excess air, in particular a diesel internal-combustion engine, having
- an SCR catalytic converter (SCR_KAT) which is arranged in the exhaust-gas line of the internal-combustion engine (BKM),
- a reducing-agent container (RED_BEH) for storing reducing agent,
- a metering device for metering the reducing agent into the exhaust-gas line upstream of the SCR catalytic converter (SCR_KAT), and
- a control device (NOₓ_STG) with associated sensors and actuators for controlling the NOₓ reduction system,
**characterized in that** the control device (NOx_STG), as a dedicated functional unit together with the sensors and actuators required to store, deliver, prepare and meter the reducing agent, is integrated at the reducing-agent container (RED_BEH).

2. Device according to Claim 1, **characterized in that** the control device (NOₓ_STG) is connected to a control unit of the internal-combustion engine (BKM_STG) via a serial interface (CAN).

3. Device according to Claim 1, **characterized in that** the control device (NOₓ_STG) includes signalprocessing circuits for the signals which are recorded by the sensors assigned to the reducing-agent container (RED_BEH).

4. Device according to Claim 3, **characterized in that** sensors for determining the filling level and the temperature of the reducing agent are assigned to the reducing-agent container (RED_BEH).

5. Device according to Claim 1, **characterized in that** the control device (NOₓ_STG) includes signalprocessing circuits for the signals which are recorded by the sensors assigned to the SCR catalytic converter (SCR_KAT).

6. Device according to Claim 5, **characterized in that** sensors for determining the temperature and the NOₓ content in the exhaust gas are assigned to the SCR catalytic converter (SCR_KAT).

7. Device according to Claim 1, **characterized in that** the control device (NOₓ_STG) includes control circuits for actuators assigned to the reducing-agent container (RED_BEH), such as delivery pump and heating device for the reducing agent.

8. Device according to Claim 7, **characterized in that** the control device (NOₓ_STG) includes control circuits for driving external actuators, such as a metering valve for metering the reducing agent.

## Revendications

1. Système de réduction de NOₓ pour un moteur à combustion interne fonctionnant avec un excès d'air, notamment pour un moteur à combustion interne diesel comprenant
- un pot catalytique SCR (SCR_KAT) monté dans le conduit d'échappement des gaz du moteur (BKM) à combustion interne,
- un réservoir (RED_BEH) d'agent réducteur destiné à emmagasiner de l'agent réducteur,
- un dispositif d'addition dosée destiné à ajouter l'agent réducteur dans le conduit d'échappement des gaz en amont du pot catalytique SCR (SCR_ KAT) et
- un dispositif (NOₓ_STG) de commande ayant des capteurs et actionneurs associés destiné à commander le système de réduction de NOₓ,
**caractérisé en ce que** le système (NOₓ_STG) de commande est intégré en une unité fonctionnelle propre ensemble avec les capteurs et actionneurs nécessités pour emmagasiner, transporter, traiter et ajouter l'agent réducteur de manière dosée sur le réservoir (RED_BEH) d'agent réducteur.

2. Système suivant la revendication 1, **caractérisé en ce que** le dispositif (NOₓ_STG) de commande est relié par une interface (CAN) série à un appareil de commande du moteur (BKM_STG) à combustion interne.

3. Système suivant la revendication 1, **caractérisé en ce que** le dispositif (NOₓ_STG) de commande comporte des circuits de traitement du signal pour les signaux qui sont détectés par les capteurs associés au réservoir (RED_BEH) d'agent réducteur.

4. Système suivant la revendication 3, **caractérisé en ce qu'**au réservoir (RED_BEH) d'agent réducteur sont associés des capteurs de détermination du niveau et de la température de l'agent réducteur.

5. Système suivant la revendication 1, **caractérisé en ce que** le dispositif (NOₓ_STG) de commande comporte des circuits de préparation du signal pour les signaux qui sont détectés par les capteurs associés au pot catalytique SCR (SCR_KAT).

6. Système suivant la revendication 5, **caractérisé en ce qu'**il est associé au pot catalytique SCR (SCR_KAT) des capteurs de détermination de la température et de la teneur en NOₓ des gaz d'échappement.

7. Système suivant la revendication 1, **caractérisé en ce que** le dispositif (NOₓ_STG) de commande comporte des circuits de commande des actionneurs associés au réservoir (RED_BEH) d'agent réducteur comme une pompe et un dispositif de chauffage de l'agent réducteur.

8. Système suivant la revendication 7, **caractérisé en ce que** le dispositif (NOₓ_STG) de commande comporte des circuits de commande d'actionneurs extérieurs comme une vanne pour l'addition dosée de l'agent réducteur.
